(19)

Europäisches
Patentamt
European
Patent Office
Office européen
des brevets

(11) **EP 3 520 987 A1**

(12) **EUROPEAN PATENT APPLICATION**

(43) Date of publication:
**07.08.2019 Bulletin 2019/32**

(51) Int Cl.:
**B29C 45/76** (2006.01)

(21) Application number: **19154605.0**

(22) Date of filing: **30.01.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2018 IT 201800002283**

(71) Applicant: **NEGRI BOSSI S.P.A.
20093 Cologno Monzese (Milano) (IT)**

(72) Inventors:
• **BRIOSCHI, Angelo
20093 Cologno Monzese (Milano) (IT)**
• **MESCHIA, Maurilio
20093 Cologno Monzese (Milano) (IT)**

(74) Representative: **Petruzziello, Aldo
Racheli S.r.l.
Viale San Michele del Carso, 4
20144 Milano (IT)**

(54) **METHOD FOR MONITORING AND CONTROL OF THE INJECTION PROCESS OF PLASTIC MATERIALS**

(57)    Method for the monitoring and control of the plastic injection molding process based on the control of the transformation of the plastic material in a mold with the help of one or more virtual pressure and temperature sensors of the plastic material, referred to relevant points of the mold cavities defined by a set of points {P} of the mold cavity and for a set of temporal coordinates {t} during the injection, holding and cooling process, wherein said virtual sensors provide information of variation of the pressure and temperature of the plastic material in said set of points {P} of the cavity for said set of temporal coordinates {t} during the injection, holding and cooling process, as a consequence of changes in measurable process variables that affect the process, said virtual sensors being represented by a mathematical model whose parameters are calculated by comparing the results between the finite element simulation of the filling-holding and cooling process with said mold in the conditions represented by the process variables in the reference conditions and the simulations to the finite elements of the filling-maintenance and cooling process under conditions obtained by varying the process variables one at a time.

*FIG.1*

EP 3 520 987 A1

## Description

Object of the present invention is to overcome the current limitations in the description of the process inside the mold used for injection molding of plastic materials, by means of a method for generating a detailed model for the process of transformation of the raw material into the mold, such as to allow an accurate correspondence between the conditions of transformation of the raw material in the mold and the quality of the piece produced. The virtualization of the material transformation process in the mold, obtained by generating virtual sensors in the mold, according to the present invention, allows to know the variations of the material conditions in the mold during the transformation as a consequence of the variations of the measurable variables.

Using this model related to the plasticization and injection models it is possible to:

- monitor the injection molding process for the purpose of quality control of the process during production and give indications to the quality management about the effect on the quality of the manufactured item as a consequence of a change from the molding reference conditions.
- maintain quality in the production process through an active control on the process variables controllable by the production plant (injection machine, mold, auxiliary equipment, ..) during the production process in such a way as to compensate for the effects caused by the variations of the uncontrollable process variables.
- maintain quality in the production process through an active control on the process variables controllable by the production plant (injection machine, mold, auxiliary equipment, ..) in the same cycle in which the deviation of the reference molding conditions occurs, operating an adaptive type control. This action is aimed at compensating for the effects caused by changes in the uncontrollable process variables.

## GLOSSARY

In the description text, expressions are used repeatedly whose meaning is defined in the following list:

- *process:* injection molding process of the plastic materials of a given product, involving an injection molding machine, a mold, a series of auxiliary equipment to the machine and the mold (thermoregulators, refrigerators, de-humidification and preheating systems of the material) , ..) which takes place according to a determined cycle defined by the process parameters;
- *controllable process variables:* all the physical quantities of the molding process regulated directly by the injection molding machine and by the auxiliary machines acting on the process;
- *process variables:* all the adjustable and non- adjustable, measurable and non-measurable physical quantities that affect the injection molding process of a given product, the process variables controllable by the machine are a subset of the process variables;
- *measurable process variables:* all the controllable and uncontrollable physical quantities that affect the injection molding process and can be measured with a given set of sensors, the set of measurable variables varies according to the sensors installed;
- *uncontrollable process variables:* the physical quantities of the process that can not be controlled by the machine or by an auxiliary equipment used for the injection molding process;
- *characteristic parameters of the material:* the physical quantities of pressure, temperature and specific volume, linked to each other by the pvT curves of a given material, in the molding process under examination;
- *injection machine:* injection molding equipment, consisting of one or more "injection groups" and a "closure group" of the mold;
- *plant:* set of injection machine, mould and auxiliary equipment used to carry out the injection molding process;
- *adaptive control:* control system whose function is to correct the effect of the variations of some of the variables not controlled by the servo control systems of the injection machine and auxiliary equipment;
- *pvT curves:* are a graphical or numerical representation of the dependence of a characteristic parameter (specific volume) of the plastic material used in the production process as a function of the applied pressure and the temperature of the material;
- *reference molding cycle:* production cycle that produces a product that meets the quality parameters required for the product and in which the injected plastic material draws a reference trajectory on the pvT diagram useful for the verification of subsequent molding processes.

*Meaning of the symbols used in the description*

- **{P}**: set of positions in the cavity of the mold in which we want to evaluate the variation of the process parameters relative to the raw material (p, T) as a function of time with respect to a reference condition. The set consists of n elements. The set does not include the positions of any real sensors placed in the mold cavity;
- **{L}**: set of positions in the mold cavity in which the physical sensors are possibly present,
- **{t}**: set of the times of the filling, holding and cooling phases in which we want to evaluate the variation of the process parameters relative to the raw material (p, T) with respect to a reference condition in the points of the set **{P}**. Also referred to as a time coordinate. The set consists of k elements;
- **{y}**: set of the percentages of filling of the mold cavity in which we want to evaluate the variation of the process parameters related to the raw material (p, T) with respect to a reference condition in the points of the set **{P}**. The set consists of u elements;
- **{x(t)}**: vector of the physical quantities that can be considered *measurable process variables* that influence the process. The vector consists of m-elements functions of time. Both the controllable variables and the variables that cannot be controlled by the control and regulation system of the plant are part of this vector;

$$\{x\,(t)\} = \{x1\,(t),\ x2\,(t),\ x3\,(t),\ x4\,(t),\ ......,\ xm\,(t)\}$$

- **{xc (t)}**: vector of the *controllable process variables* that influence the process; these are process variables that can be modified by the plant control system. The vector is a subset of the vector **x(t)** and consists of h elements;
- **{x'c(t)}**: vector of the *controllable process variables* that influence the process obtained from the vector **x(t)** by putting all the elements corresponding to uncontrollable variables to zero. The vector consists of m-elements;
- **{x'nc(t)}**: vector of the *uncontrollable process variables* that influence the process obtained by the vector x(t) by setting all the elements corresponding to controllable variables to zero. The vector consists of m-elements;
- **{p(t)}**: vector of the *pressure* in the mold cavity in the n-points of the set **{P}**. The vector consists of n elements of time functions;

$$\{p\,(t)\} = \{p1\,(t),\ p2\,(t),\ p3\,(t),\ p4\,(t),\ ......,\ pn\,(t)\}$$

- **{T (t)}**: vector of the *plastic material temperature* in the mold cavity in the n-points of the set **{P}**. The vector consists of n elements of time functions;

$$\{T\,(t)\} = \{T1\,(t),\ T2\,(t),\ T3\,(t),\ T4\,(t),\ ......,\ Tn\,(t)\}$$

- **{pq}**: matrix of the pressure values *of the plastic material* in the mold cavity in the q-th cycle in the n points of the set **{P}** (rows) for the k sampling instants (columns). The vector consists of n rows and k columns;

$$\{p_q\} = \left\{ \begin{matrix} p_1(t_1) & p_1(t_2) & p_1(t_3) & . & . & . & . & . & p_1(t_k) \\ p_2(t_1) & p_2(t_2) & p_2(t_3) & . & . & . & . & . & p_2(t_k) \\ . & . & . & . & . & . & & & \\ . & . & . & . & . & . & & & \\ p_n(t_1) & p_n(t_2) & p_n(t_3) & . & . & . & . & . & p_n(t_k) \end{matrix} \right\}$$

- **{Tq}**: matrix of the temperature values *of the plastic material* in the mold cavity in the q-th cycle in the n points of the set {P} (rows) for the k sampling instants (columns). The vector consists of n rows and k columns;

$$\{T_q\} = \left\{ \begin{array}{cccccc} T_1(t_1) & T_1(t_2) & T_1(t_3) & \ldots & \ldots & T_1(t_k) \\ T_2(t_1) & T_2(t_2) & T_2(t_3) & \ldots & \ldots & T_2(t_k) \\ \cdot & \cdot & \cdot & \cdot & \cdot & \cdot \\ \cdot & \cdot & \cdot & \cdot & \cdot & \cdot \\ T_n(t_1) & T_n(t_2) & T_n(t_3) & \ldots & \ldots & T_n(t_k) \end{array} \right\}$$

- $\{p_0\}$: matrix of the pressure values *of the plastic material* in the mold cavity in the reference cycle in the n-points of the set **{P}** (rows) for the k sampling instants (columns). The vector consists of n rows and k columns; $\{T_0\}$: matrix of the temperature values *of the plastic material* in the mold cavity in the reference cycle in the n-points of the set **{P}** (rows) for the k sampling instants (columns). The vector consists of n rows and k columns;
- $\{p_0\}_i$ vector whose elements represent the pressure of the reference cycle for each temporal coordinate belonging to the set **{t}**, in the i-th point of the cavity, corresponding to the i-th row of the matrix $\{p_0\}$
- $\{T_0\}_i$ vector whose elements represent the temperature of the reference cycle for each temporal coordinate belonging to the set **{t}**, in the i-th point of the cavity, corresponding to the i-th row of the matrix $\{T_0\}$;
- $\{p\}_i$ the vector whose elements represent the pressure of the cycle under examination for each temporal coordinate belonging to the set **{t}**, in the i-th point of the cavity, corresponding to the i-th row of the matrix **{p}**;
- $\{T\}_i$ the vector whose elements represent the temperature of the cycle under examination for each temporal coordinate belonging to the set **{t}**, in the i-th point of the cavity, corresponding to the i-th row of the matrix **{T}**;
- $\{\delta \mathbf{pi}\}$ vector of the variation of the pressure of the cycle under examination with respect to the pressure of the reference cycle in the i-th point of the cavity, and obtained as the difference between the vectors $\{p\}_i$ and $\{p_0\}_i$;
- $\{\delta \mathbf{Ti}\}$ vector of the variation of the temperature of the cycle under examination with respect to the temperature of the reference cycle in the i-th point of the cavity, and obtained as the difference between the vectors $\{T\}i$ and $\{T_0\}i$;
- $\{\theta 1\}$ and $\{\theta 2\}$ vectors whose elements are defined as the maximum value condition for the vectors norm for each point **{P}** that define the condition to be respected in order to define the system under quality molding conditions;
- $\{\varepsilon_1\}$ **and** $\{\varepsilon_2\}$ vectors whose elements are defined as the maximum value condition for the vectors norm for each point **{P}**, which define the condition to be respected to define the variations to the controllable variables in order to control the process molding;
- $\{\varepsilon'_1\}$ **and** $\{\varepsilon'_2\}$ vectors whose elements are defined as the maximum value condition for the vectors norm for each point **{L}**, which define the condition to be respected to define the variations to the controllable variables to put in quality control the molding process.

## STATE OF ART

Maintaining quality in the injection molding process of plastic materials means: reproducing over time a manufactured article having the same weight, dimensional, structural and aesthetic characteristics of a sample manufactured product, obtained during the process validation phases, assumed to refer to quality.

In order to guarantee the maintenance of quality in the injection molding process of plastic materials, technical development has initially concentrated on the control and research of repeatability of the process parameters directly controllable by the injection machine:

- plasticizing chamber temperatures,
- injection speed,
- pressure on the material in the plasticizing chamber during the holding phase,
- implementation times for the various phases,
- rotation speed of the screw during the plasticizing phase,
- counter-pressure to axial movement of the screw during the plasticizing phase,
- switching between the injection and holding phases.

These parameters are subject to adjustment by the servo controls of the injection machine, which must ensure compliance with the set points and repeatability in production cycles.

Subsequently, to improve the quality control in the molding process, it was tried, where possible, to monitor and possibly control some variables influencing the process related to the mold:

- temperature of the hot chamber for the distribution of the plastic material in the mold (where present),
- temperature of the mold conditioning fluid on the various circuits,

- temperature of the material in the cavity at a physical point defined during the construction of the mold,
- pressure of the material in the cavity at a physical point defined during the construction of the mold.

The first two variables are easily measurable and having available the appropriate hardware are also controllable, while the temperature and pressure of the material in the cavity require a sensor whose installation must be foreseen in the design phase and carried out in the construction phase.

Moreover, since there is no explicit or easily specified relationship between the pressure and temperature parameters in the cavity (at the point measured by the sensor) with the variables controllable by the machine it becomes difficult without a process model to define a control algorithm that is able to act on the controllable variables of the process to keep the pressure and temperature values in the mold cavity stable and repeatable.

For this reason the two variables, pressure and temperature of the mold measured with the cavity sensors were used as elements to evaluate the quality and repeatability of the process but not for the automatic regulation of the process by the injection molding machine unless for switching between the filling phase and the holding phase.

In order to improve the monitoring of the process, the monitoring perimeter of the process variables has been further extended, including in some cases also such variable linked to the plastic material before the plasticizing phase and after the plasticization:

- temperature of the raw material in the loading hopper,
- moisture of the raw material in the loading hopper,
- temperature of the melt in the plasticizing chamber.

In addition to monitoring and control of process parameters, the weight and dimensional control of the product were taken into account as product quality indicators. These parameters, compared to the reference values, are used with appropriate tolerance thresholds to define the quality level of the manufactured product a posteriori (piece already produced).

The monitoring and control actions on the set of parameters and variables listed have been improved with the technical development. Initially, the action was exclusively to monitor a subset of the controllable parameters that in some cases include some of the variables associated with the mold, the raw material, the weight or the dimensions of the product; with the possibility, by setting appropriate tolerance thresholds on the parameters, to manage an acceptable field and a waste of the product when one or more parameters is beyond the acceptance limits. Recently, more complex regulation actions have been introduced, which do not limit the control parameters of the process controlled by the injection machine or one of the auxiliary components to the set point, but provide for the possibility of modifying the references for one or more parameters of the process to maintain the production system in quality conditions.

This control action on the injection molding process is obtained through adaptive controls which, using a model of the system and measuring as many process variables as possible, are able to act on the controllable parameters of the machine to maintain the reference conditions for the quality production.

The models used for adaptive control include modelling the plasticizing and injection process and in a very simplified way the model of the material transformation process in the mold, the objective of the action based on these models is to correct or compensate the effects of the change in viscosity and density of the material before being injected into the mold.

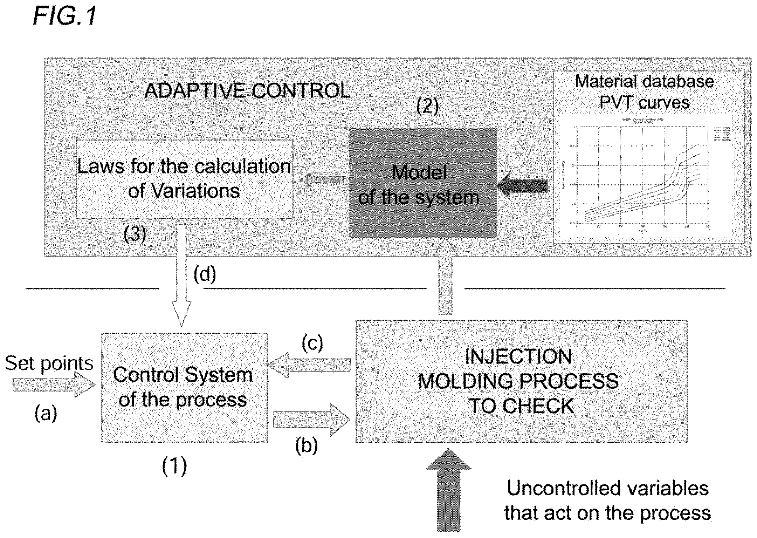

The diagram of Figure 1 represents the reference structure for the adaptive control on the injection molding process.

The common basis of the adaptive control systems for the plastic injection molding process, with reference to Figure 1, consists of:

- control system (1) of the controllable variables of the machine or plant; the system regulates the controllable variables (b) according to the references (a) and the values detected on the sensors (c);
- model of the system to be controlled (2);
- functional block (3) that determines the variations of the adjustable parameters (d) to respond to the regulation principle to which the adaptive control must refer (eg: compensation of the viscosity variation, compensation of the density variation, ....).

The adaptive control does not intervene to modify the parameters of the regulation loops (gains, filters, ...), but the reference values (set points) of the adjustable variables object of the control and regulation systems of the injection machine.

To guarantee a good functioning of the adaptive control it is necessary that:

- the control and regulation systems of the machine or more generally of the plant (machine and auxiliary equipment) must ensure that the set point values of the adjustable variables are actuated and that the regulators have an adequate rigidity to the perturbations;
- the regulation systems must have the ability to regulate with an error that is of an order of magnitude less than the variations produced by the adaptive control;
- the model of the system on which the adaptive control is to be implemented must be accurate according to the level of compensation to be achieved.

In the case of the plastic injection molding process to obtain a complete and accurate model, it is necessary to include in the modelled system the mold and the auxiliary components that have an effect on the process.

It is relatively simple to create a model that describes the operation of the machine in relation to the plasticizing and injection process and that defines the correlation between the variables that define the state of the material before entering the mold (Tm = temperature of the melt, $\mu$_m = viscosity of the material in the plasticizing chamber, $\rho$_m density of the material in the plasticizing chamber) and the process variables (controllable or uncontrollable).

The model can be constructed using the thermodynamic balance, mass conservation equations and the pvT curves (pressure, specific volume, temperature) of the plastic material used for the transformation.

There are different representations of the model that links the parameters that determine the state of the material in the plasticizing chamber (Tm, n_m, $\rho$_m) to the process variables. The most complex models take into account the largest set of process variables.

All models are based on the possibility of measuring process variables or determining them indirectly. If a process variable is not measurable or can not be determined indirectly, it must be excluded from the model.

The current adaptive controls use the values foreseen by the system model for the variations of Tm, $\mu$_m, $\rho$_m to vary the conditions of filling the mold with a given law (experimentally verified). In general they are limited to the variation of two parameters:

- volumetric variation of the material injected into the mold without modifying other parameters that can be controlled by the injection machine during the injection phase (eg injection speed, ...);
- variation of holding pressure.

There are adaptive controls that do not use a model obtained by equations of equilibrium and thermodynamic balance, but they determine the variation by carrying out work measures during the injection phase. These models with an appropriate corrective coefficient (to be determined experimentally according to the material and the geometry of the mold) want to achieve the same final effect by limiting themselves to a single measure that contains all the effects of the variations of the process variables. With this method part of the effect of the mold is also taken into account (a variation of the mold temperature causes a variation in the injection work). The results are adequate when the causes of variation are limited and the correction coefficient is adequately verified.

With this method it is not possible to know the weight of each single variation. Variations that are antithetical in determining the variation of the injection work are not seen by the system.

It is evident that without a model defining what effect the variations of the process variables have on the transformation of the material in the mold, it is not possible to predict the effect on the transformation of the material in the mold and consequently evaluate the final effect on the product and/or implement corrective actions on several variables to obtain the desired compensation and restore the control conditions on the process.

Building a model of the transformation process that takes place in the mold to describe the behavior of the characteristic parameters of the material during the transformation (temperature of the material in the mold, pressure on the material in the mold) as a function of the process variables using the equations of thermodynamics and fluid dynamics and of the pvT curves of the material is a problem of difficult solution even in the case of pieces with simple geometry and with only one injection point.

Modeling the process in the mold is limited by the availability of information related to what happens inside the mold during the injection and holding process. It was tried to circumvent the problem, as mentioned previously, by inserting a pressure sensor into the mold and in some cases a temperature sensor. The position of this sensor is defined in the design phase, taking into account the limitations imposed by the geometry of the mold.

The knowledge of the characteristic parameters of the material in the mold at a specific point is not equivalent to having complete information on the transformation of the material during the injection process in the mold as a whole. It is not always possible to transfer the pressure and temperature information detected at a point with the values of the same parameters to another point of the mold (large molds, molds equipped with sequential nozzles, molds with multiple injection points in parallel,..) .

In general the availability of the cavity transducer allows to have precise information about the stability of the process and the verification of the maintenance of the reference conditions, but the availability of this information alone does not allow to act to correct and compensate for any variations without a model of the process that links changes in the parameters of the material in the mold to the process variables.

On the contrary, by having this model it is possible to calculate the variations to be made to the controllable variables to bring the process back to the reference conditions.

EP 1297941 A2 describes an adaptive predictive control; predictive because it uses a model to predict future states, adaptive as it adapts the control laws to minimize the error between the states required and the states predicted by the model.

Based on the current status, a command proposal is prepared for the actuators, based on which the model evaluates the future status of the machine.

Using this information, the error is calculated between the expected future status and the desired state; if the error falls within a prefixed limit, the process is completed and the command is sent to the actuators; if, on the other hand, the error does not fall within the prefixed limit, by means of an appropriate correction strategy to minimize the error, the set of command is recalculated.

US 2017/015040 A1 describes a procedure whose purpose is to set up a press in such a way that the pressure profile in the holding phase over time follows a desired curve. The LUOL R C ET AL publication "On-line self -turning ...", INDUSTRIAL ELECTRONIC SOCIETY, 2000, IECON 2000, 26TH ANNUAL CONFERENCE OF THE IEEE 22-28 OCT. 2000, PISCATAWAY, NJ, USA, vol. 2, 22 October 2000, pages 1068-1073 describes a method by means of the finite element calculation with which it is possible to find a relationship between the pressure measured at two points of the mold by means of physical sensors and the pressure at a given point of the mold of interest for molding but where it is not possible or practical to install a pressure transducer.

US 2002/188375 A1 describes a setting procedure of molding on a press with a given mold using a simulated molding system.

## Object of the invention

Object of the present invention is to overcome the current limitations in the description of the process inside the mold used for injection molding of plastic materials, by means of a method for generating a detailed model for the process of transformation of the raw material into the mold, such as to allow an accurate correspondence between the conditions of transformation of the raw material in the mold and the quality of the piece produced.

The invention proposes the virtualization of the material transformation process in the mold, obtained by generating virtual sensors in the mold, so as to know the variations of the material conditions in the mold during the transformation as a consequence of the variations of the measurable variables.

Using this model associated with the plasticizing and injection models, it is possible, through an adaptive control, to intervene on the controllable variables to maintain production quality.

This approach allows to determine the effect on the material in the mold of the variations of the process variables referred to the mold and to the specific product in production and to compensate the effect.

More in detail, the object of the invention refers to:

- a method for monitoring and controlling the plastic injection molding process based on the control of the transformation of the plastic material in a specific mold on the pvT diagram of the plastic material used in said molding process, with the aid of one or multiple virtual pressure and temperature sensors of the plastic material, positioned at relevant points of the mold cavity defined by a set of points *{P}* of the mold cavity and for a set of temporal coordinates *{t}* during the injection, compaction and cooling down;
- a method for generating virtual sensors inside the cavity that give the information of variation of pressure and temperature over time for a determined point of the cavity as a function of the variation of the process variables;
- a method for calculating sensor parameters using the finite element simulation methods normally used to study the injection process;
- a method to keep the molding process within the limits required to guarantee production quality using virtual sensors;
- a method for correlating measured values on real sensors to changes in process variables and consequently intervening on controllable variables to compensate for the effects of changes in process variables.

The invention has the characteristics set out in the independent claim 1. Advantageous embodiments of the invention are set out in the dependent claims.

## Brief description of the figures

Further characteristics of the invention will be made clearer by the detailed description that follows, referring to a purely exemplary and non-limiting embodiment thereof, with reference also to the attached drawings, which show:

Figure 1 -    Reference structure for the adaptive control on the injection molding process.

Figure 2 -    Trajectories of the transformation of the material into the mold on the pvT diagram of the plastic material used. The points A, B, C, D, E are an example of the instants of the set {t} in which the parameters p and T of the raw material in transformation are sampled.

Figure 3 -    Reference trajectory and tolerance area for reproducing the conditions of the reference cycle on the pvT diagram.

Figure 4 -    Reference trajectory with identification of control points and tolerance area for reproducing the conditions of the reference cycle on the pvT diagram.

**Detailed description**

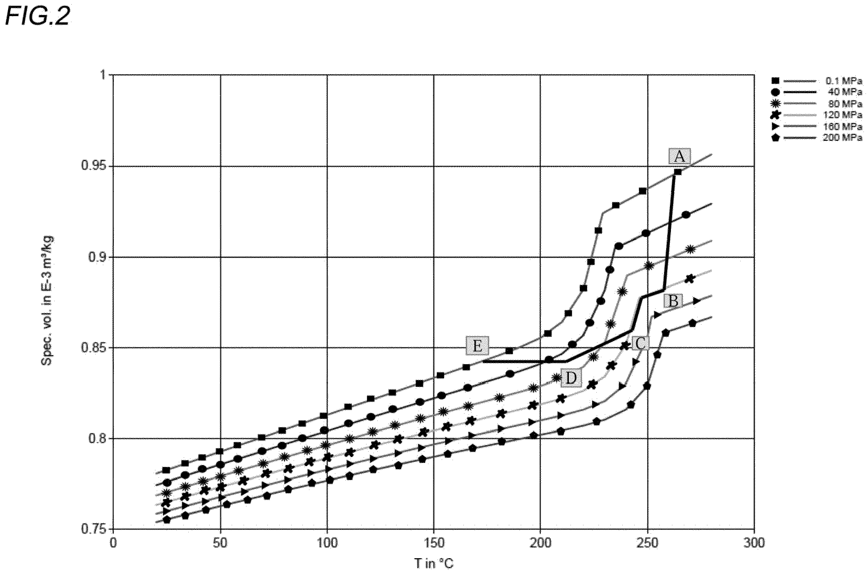

The importance of having information about the temperature and pressure of the material in the various points of the mold cavity as a function of time is linked to the fact that with this information it is possible in principle to trace the transformation path for each point of the cavity. of the plastic material on the pvT diagram of the material used in the process **(figure 2)** and consequently identify the transformation that the plastic material undergoes in the mold during the filling and holding phases.

Having a method to reproduce the same transformation of the plastic material of the reference cycle in every molding cycle, it is possible to guarantee the correspondence between the quality of the manufactured products and that of the reference cycle.

The correspondence of the transformation curves on the pvT diagram is such as to guarantee a priori the quality of the manufactured products regardless of the constancy of the controllable or measurable variables.

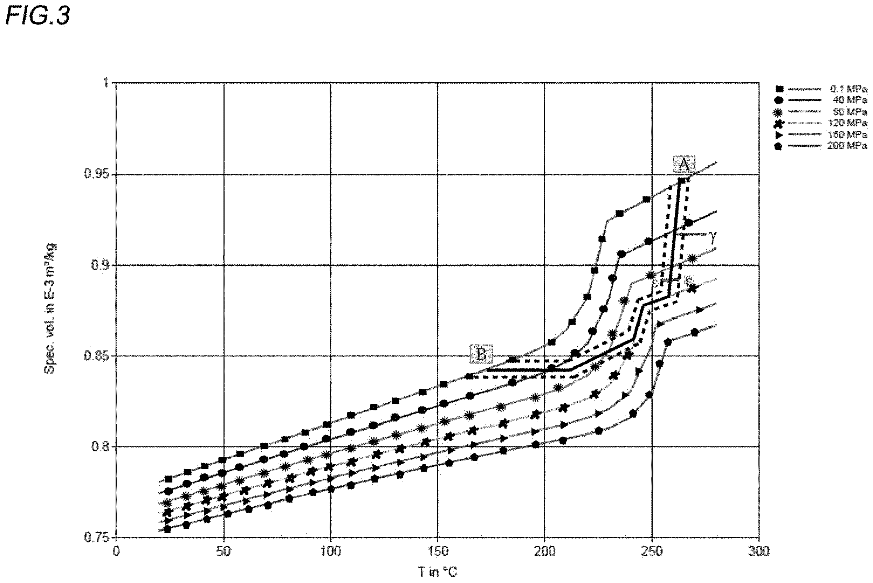

With reference to **Figure 3,** indicating with ($\gamma$) the transformation path (from A to B) of the plastic material during the molding cycle on the pvT diagram in the "P" point of the mold cavity during the *reference molding cycle,* an area around the trajectory ($\gamma$) defined by two curves spaced $\varepsilon$ from the reference curve can be identified. Where $\varepsilon$, defined by the quality system, is smaller the stricter the process control, can be a constant or a function of time and/or one of both parameters of the material (p, T); in general we have:

$$\varepsilon = \varepsilon\,(t, p, T)$$

The area thus identified determines the space within which the trajectory of transformation of the plastic material must remain in the point "P" of the mold during the molding cycles following the reference cycle in order to consider the process in the point "P" of the cavity reproduced and in accordance with the reference cycle.

In order to guarantee the quality of the product, the condition described must be checked for a set of points **{P}** of the mold cavity considered significant for the quality system and for a set of instants (time coordinates) **{t}** in which one wants to sample the process.

The dimension of the set of points **{P}** and of the set of temporal coordinates **{t}** is not significant from the point of view of the principle and of the method to be illustrated.

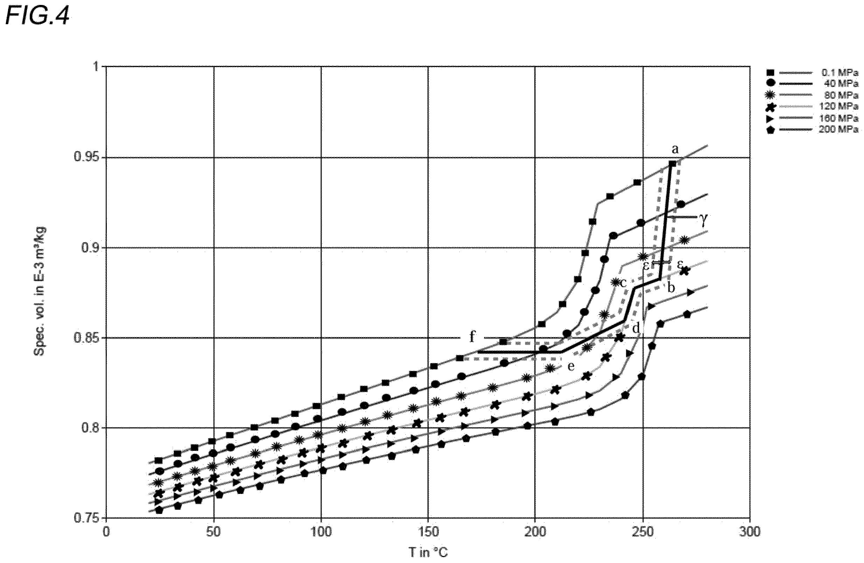

With reference to **Figure 4,** indicating with (a, b, c, d, e) the points of the trajectory corresponding to the sampling moments of the pressure and temperature values in the mold cavity the condition on the distance between the curve of the cycle under examination and the curve of the reference cycle can be transformed into the condition of verifying that the differences between the pressure and temperature values of the plastic material in the mold cavity for the cycle under examination and the values of the reference cycle, for the selected instants (set of the times **{t}**) and in the points of the set **{P}**, must be smaller than a value $\varepsilon p$ and $\varepsilon T$ respectively. The values of $\varepsilon p$ and $\varepsilon T$, are defined by the quality system with a criterion aimed at imposing constraints on the transformation of the plastic material into the mold to guarantee the constancy of the obtained product.

These values can be defined by molding simulations of the process on the model of the product, by means of experimental tests or by experience of production of similar products.

In general, $\varepsilon p$ and $\varepsilon T$ are not constant values for all the points of the set **{P}** and for all the temporal coordinates **{t}**, but they can be variable from point to point and can vary according to the time coordinates.

The previous condition expressed in qualitative form can be translated into a more precise mathematical form with the following expression:

-    for every i-th point of the set {P} and for every instant j-th of the set {t} the following relation is worth

$$(p_n - p_0)_{ij}^2 < (\varepsilon p_{ij})^2 \qquad \forall\ i \in \{P\},\ \forall\,j \in \{t\} \qquad\qquad (1)$$

$$(T_n-T_0)_{ij}^2 < (\varepsilon T_{ij})^2 \qquad \forall\ i \in \{P\},\ \forall\ j \in \{t\} \qquad (2)$$

where:

- $(p_n - p_0)_{ij}$ are the pressure difference between the n-th cycle and the reference cycle in the i-th point and in the j-th coordinate;
- $(T_n - T_0)_{ij}$ are the difference in temperature between the n-th cycle and the reference cycle in the i-th point and in the j-th coordinate;
- spij is the maximum allowable pressure variation at the i-th point of the mold at the j-th temporal coordinate;
- $\varepsilon T_{ij}$ is the maximum permissible temperature variation at the i-th point of the mold at the j-th temporal coordinate.

The expressions (1) and (2) can be rewritten as:

$$(\delta p_n)_{ij}^2 < (\varepsilon p_{ij})^2 \qquad \forall\ i \in \{P\},\ \forall\ j \in \{t\} \qquad (3)$$

$$(\delta T_n)_{ij}^2 < (\varepsilon p_{ij})^2 \qquad \forall\ i \in \{P\},\ \forall\ j \in \{t\} \qquad (4)$$

where:

- $(\delta p_n)_{ij}$ $(\delta T_n)_{ij}$ are the variations of the pressure and temperature of the material in the cavity in the i-th point and at the t j-th instan in the n-th molding cycle with respect to the reference cycle.

The relations (3) and (4) indicate that for the purpose of checking the repeatability of the process to maintain the quality of the product, it is not necessary to know the absolute values of the pressure and temperature of the material in the cavity but that it is sufficient to know the variations of these parameters compared to the reference cycle.

The relations (3) and (4) indicate that the maintenance of quality is guaranteed by an analysis of the variations with respect to the reference conditions. It is not as important for the purpose of quality to know the absolute value of the temperature and pressure of the material in the mold (only possible with real transducers).

The process virtualization, obtained by generating virtual sensors in the mold cavity, is a mathematical representation of a process modelling method.

The mathematical representation through virtual sensors makes the representation of the virtual model of the process evident and intuitive. The virtual sensors are associated with each point of the set **{P}** of the points of the mold cavity taken as reference for the verification of the repetitiveness of the process. The possibility of generating any number of sensors in the mold cavity allows to calculate the variations in pressure and temperature of the material with respect to the reference curve in the moments selected by the set **{t}** for each significant point of the manufactured product.

It is intuitive to deduce that next to a configuration of only virtual sensors it is also possible a configuration that includes both virtual sensors and real sensors. In this case, next to the real transducer (normally placed at the end point of the cavity reached by the material) it is possible to generate a set of virtual sensors arranged in points of the cavity along the flow path starting from the injection point. The set of real and virtual sensors helps to monitor the transformation process according to the same criteria illustrated in **Figure 4** and expressed in the relations (3) and (4).

Knowing the position of the real sensor it is possible to define a virtual sensor in the same position and consequently using the virtualization method to define the link between the variations read by the real sensor to the variation of the process variables.

In this way it is possible to build the model that links the parameters read by the real sensor to the process variables and consequently calculate the variations to be made to the controllable variables to bring the process back to the reference conditions.

This method also allows to compare the results obtained by the virtual sensor with the values read by the real sensor and to verify experimentally the correctness of the virtualization method.

***Active action on the process***

With the virtualization of the process, obtained through virtual sensors, we know the link between the variation of the characteristic parameters of the plastic material in the mold cavity (p, T) and the controllable and uncontrollable process variables. This allows, in addition to the verification of the process stability according to equations (3) and (4), also to define a strategy for the active compensation action by acting on the controllable variables to restore the correct process conditions. In the event of a disturbing action on the process by one or more uncontrollable variables, the active control action involves changing one or more controllable variables (eg: injection speed, post-pressure switching point, ...) to compensate for the disturbing action. The calculation of the variation of controllable variables uses the sensor virtualization model.

***Definition of temporal coordinates of the process and of the vector x(t) of the process variables for the virtualization of the transformation process in the mold***

The set of n-points of the mold cavity in which we want to examine the trend of the characteristic parameters of the plastic material is defined by the whole: ***{P}.***

The set of k-instants in which we want to examine the trend of the characteristic parameters of the plastic material for each point of the set ***{P}*** is defined by the set: ***{t}***. Since the transformation of the plastic material takes place in the injection, holding and cooling phase, the set ***{t}*** represents the significant moments of these phases. The time base is therefore a portion (injection, holding and cooling) of the cycle time. At each new cycle the parameters:

$$p(t) = \{p_1(t), p_2(t), p_3(t), p_4(t),......, p_n(t)\} \tag{5}$$

$$T(t) = \{T_1(t), T_2(t), T_3(t), T_4(t),......, T_n(t)\} \tag{6}$$

they are updated at the same moments.

As an alternative to the set ***{t}***, the set ***{y}*** of the percentages of filling of the mold cavity can be used as the basis on which to evaluate the characteristic parameters of the plastic material in the n-points of the cavity. This alternative is only possible for the filling phase, only the time base can be used in the holding phase.

The set ***{t}*** or the sets ***{y}***, ***{t}*** represent the coordinates in which the evolution of the process is observed in the points of the set ***{P}***.

Since the elements of the set ***{y}*** represent only a different way of defining the temporal coordinates on which the evolution of the process is followed, in the rest of the description we will use to identify the coordinate of the process the set ***{t}*** without for this lose generality of the described method.

The vector ***x(t)*** represents the set of process variables that can change over time and which influence the process.

Also variables controllable by the machine or by auxiliary equipment are part of this set.

If, as stated in the introduction, the servo controls work correctly, the variables controllable by their definition cannot vary with respect to the values of the reference cycle due to perturbations.

For a process variable to be part of the vector ***x(t)*** it must be measurable or determinable by an indirect method. If a variable is not measurable or determinable it cannot be included in the vector ***x(t)*** because, being unknown, it becomes impossible to determine its effects on the process.

The set of process variables can include variables that can be indirectly determined which in turn are function of several process variables (for example, the temperature of the melt in the chamber) and which allow the variables from which they depend to be eliminated from the set, unless that the primary variables have no other effects on the process than the effect on the dependent variable.

In the following it will be seen that it is not necessary to know the absolute value of the variables of the vector ***x(t)*** but it is sufficient to know the variation of the variables with respect to the values of the reference process.

If we indicate with ***$x_0$*** the vector of the measurable variables of the process in the reference cycle (process), then we have for the variations of the measurable variables the following relation:

$$\delta(x(t)) = x(t)-x_0 \tag{7}$$

The controllable variables can be used to correct the effects of changes in uncontrollable variables. The model is all the more complete as many variables of the process are taken into account in the model.

It is essential to consider that the time ***"t"*** that appears in the expression ***x(t)*** and $\delta$***(x(t))*** should not be confused with the set ***{t}*** of the temporal coordinates of the process in a specific production cycle.

The ***"t"*** that appears in the expression ***x(t)*** and $\delta$***(x(t))*** represents the total time of observation of the process (N cycles) and not the single cycle. In general, the time ***"t"*** is the total time of observation (production) from the moment of beginning of the production phase. This time is reset every time a productive phase starts again.

The variables $x(t)$ vary during the whole observation time of the process and therefore if we consider the value they take on the q-th cycle we have:

$$x(t_q) = \{ x_1(t_q),\ x_2(t_q),\ x_3(t_q),\ \ldots\ldots, x_m(t_q)\} = \{ x_{1q},\ x_{2q}, x_{3q},\ \ldots\ldots, x_{mq} \} \quad (8)$$

$$\delta(x(t_q)) = \{ \delta x_1(t_q),\ \delta x_2(t_q),\ \delta x_3(t_q),\ \ldots, \delta x_m(t_q)\} = \{ \delta x_{1q}, \delta x_{2q},\ \delta x_{3q},\ \ldots, \delta x_{mq}\} \quad (9)$$

$x_{iq}$ represents the value of the i-th variable of the process at the q-th cycle of production,

$\delta x_{iq}$ represents the value of the variation of the i-th variable of the process with respect to the reference value for this variable at the q-th cycle of production,

$x_{iq}$ and $\delta x_{iq}$ are scalar quantities (they have a defined value referring to the q-th cycle of production).

It is necessary to specify that because in the following we are interested in defining the dependence between the fundamental process parameters "p" (pressure in the cavity) and "T" (temperature in the cavity) in the q-th molding cycle from the process variables $x(t_q)$, the $x_{iq}$ values of the variables that appear in the vector $x(t_q)$ and similarly the $\delta x_{iq}$ values that appear in the vector $\delta x(tq)$ are the values of the variables relating to the q-th cycle in the case that the variable generates a functional dependence in the same cycle or relative to the (q-1) -th cycle if the variable generates a functional dependence in the following cycle (example all the variables associated to the plasticization, raw material in the hopper, ..).

***Model for the virtualization of the material transformation process in the mold***

The characteristic parameters of the material during the transformation in the mold in the q-th cycle (the subscript q indicates the cycle in which the characteristic parameters of the transformation of the material are evaluated):

$$p_q(t) = \{p_1(t), p_2(t), p_3(t), p_4(t),\ldots\ldots, p_n(t)\}_q \quad (10)$$

$$T_q(t) = \{T_1(t), T_2(t), T_3(t), T_4(t),\ldots\ldots, T_n(t)\}_q \quad (11)$$

evaluated in the n significant points of the set *{P}* of the mold are calculated in the k time instants of the set {t} of the q-th cycle. The representation of the values of the characteristic parameters can be carried out using the following two matrices:

$$\{p_q\} = \left\{ \begin{matrix} p_1(t_1) & p_1(t_2) & p_1(t_3) & \ldots\ldots & p_1(t_k) \\ p_2(t_1) & p_2(t_2) & p_2(t_3) & \ldots\ldots & p_2(t_k) \\ \cdot & \cdot & \cdot & \cdot & \cdot & \cdot \\ \cdot & \cdot & \cdot & \cdot & \cdot & \cdot \\ p_n(t_1) & p_n(t_2) & p_n(t_3) & \ldots\ldots & p_n(t_k) \end{matrix} \right. \quad (12)$$

$$T_1(t_1) \quad T_1(t_2) \quad T_1(t_3) \ldots\ldots \quad T_1(t_k)$$

$$T_2(t_1) \quad T_2(t_2) \quad T_2(t_3) \ldots\ldots \quad T_2(t_k)$$

$$\{T_q\} = \{ \quad \cdot \quad \cdot \quad \cdot \quad \cdot \quad \cdot \quad \cdot \quad \} \qquad (13)$$

$$T_n(t_1) \quad T_n(t_2) \quad T_n(t_3) \ldots \ldots T_n(t_k)$$

Each row of the matrix (12) represents the pressure value on the material at a given point of the mold in the q-th cycle for all the instants of the set of temporal coordinates $\{t\}$.

Each row of the matrix (13) represents the value of the temperature of the material at a given point in the mold in the q-th cycle for all the instants of the set of temporal coordinates $\{t\}$.

The rows of the matrices (12) and (13) represent the vector of the pressures and temperatures of the q-th production cycle sampled by a virtual sensor placed at a given point of the mold in the instants of the set of temporal coordinates $\{t\}$.

If we refer to the i-th point of the mold, in the q-th molding cycle the vectors:

$$p_{iq} = \{p_{i1}, \ p_{i2}, \ p_{i3}, \ p_{i4}, \ldots\ldots, p_{ik}\}_q \qquad (14)$$

$$T_{iq} = \{T_{i1}, T_{i2}, T_{i3}, T_{i4}, \ldots\ldots, T_{ik}\}_q \qquad (15)$$

are the representation of the pressure of the cavity and the temperature of the material for all the instants of the set of temporal coordinators $\{t\}$.

Equations (14) and (15) represent the set of values detected by the virtual sensor placed in the i-th point of the mold and which samples the pressure and temperature values of the plastic mass injected into the mold at the time moments of the set $\{t\}$.

The subscript "q" of the vector represents the index of the production cycle in which the values of pressure and temperature are determined.

The characteristic parameters of the material in the mold are functions of the process variables; we can write for equations (14) and (15):

$$p_{iq} = p_i\,(x(t_q))_q = \ p_i\,(x_1(t_q),\ x_2(t_q), x_3(t_q),\ \ldots\ldots, x_m(t_q))_q \qquad (16)$$

$$T_{iq} = T_i\,(x(t_q))_q = \ T_i(x_1(t_q),\ x_2(t_q), x_3(t_q),\ \ldots\ldots, x_m(t_q))_q \qquad (17)$$

and consequently the following relationships can be written for each term of the vectors (14) and (15):

$$(p_{ij})_q = p_{ij}(x_1(t_q),\ x_2(t_q), x_3(t_q),\ \ldots\ldots, x_m(t_q)) \qquad (18)$$

$$(T_{ij})_q = T_{ij}(x_1(t_q),\ x_2(t_q), x_3(t_q),\ \ldots\ldots, x_m(t_q)) \qquad (19)$$

The parameters $(p_{ij})_q$ and $(T_{ij})_q$ of the q-th cycle refer to the pressure and temperature values at the i-th point of the mold at the j-th instant detected by the i-th virtual sensor. If the values of the reference cycle $(p_{ij})_0$ are subtracted from equations (18) and (19), we obtain:

$$\delta(p_{ij})_q = (p_{ij})_q - (p_{ij})_0 = \delta p_{ij}(x_1(t_q),\ x_2(t_q), x_3(t_q),\ \ldots\ldots, x_m(t_q)) \qquad (20)$$

$$\delta(T_{ij})_q = (T_{ij})_q - (T_{ij})_0 = \delta T_{ij}(x_1(t_q),\ x_2(t_q), x_3(t_q),\ \ldots\ldots, x_m(t_q)) \qquad (21)$$

Equations (20) and (21) express the variations of the characteristic parameters of the material in the mold as a function of the process variables detected by the i-th virtual sensor.

The functions expressed by equations (16) and (17) in the time interval between the beginning of the injection phase and the end of the cooling phase of the q-th cycle, since they represent a physical process, are by their nature continuous and derivable . Indicating with *Jpi* and *JTi* the Jacobian matrices of (k * m) elements of the $p_{iq}$ e $T_{iq}$ functions (pressure and temperature at the i-th point of the mold) with respect to the process variables *x(t)* we have the matrices (22) and (23):

$$
\mathbf{J\,p_i} = \left\{
\begin{array}{cccc}
\partial p_{i1}/\partial x_1 & \partial p_{i1}/\partial x_2 & \ldots \ldots \partial p_{i1}/\partial x_m & \quad . \quad \quad . \\
\partial p_{i2}/\partial x_1 & \partial p_{i2}/\partial x_2 & \ldots \ldots \partial p_{i2}/\partial x_m & \\
. & . & & \\
. & . & & . \\
\partial p_{ik}/\partial x_1 & \partial p_{ik}/\partial x_2 & \ldots \ldots \partial p_{ik}/\partial x_m &
\end{array}
\right\} \qquad (22)
$$

$$
\mathbf{J\,T_i} = \left\{
\begin{array}{cccc}
\partial T_{i1}/\partial x_1 & \partial T_{i1}/\partial x_2 & \ldots \ldots \partial T_{i1}/\partial x_m & \quad . \quad \quad . \\
\partial T_{i2}/\partial x_1 & \partial T_{i2}/\partial x_2 & \ldots \ldots \partial T_{i2}/\partial x_m & \\
. & . & & . \\
. & . & & \\
\partial T_{ik}/\partial x_1 & \partial T_{ik}/\partial x_2 & \ldots \ldots \partial T_{ik}/\partial x_m &
\end{array}
\right\} \qquad (23)
$$

$\partial p_{ij}/\partial x_w$ represents the derivative of the pressure at the i-th point at the j-th time with respect to the w-th variable of the process.

$\partial Tij/\partial xw$ represents the derivative of the temperature at the i-th point at j-th time with respect to the w-th variable of the process.

The differential of the $p_i(x(t))$ and $Ti(x(t))$ functions at the point $x_0$ is the linear application $\mathbf{R^m} \rightarrow \mathbf{R^k}$ associated with the Jacobian matrices $\mathbf{Jx_0\,p_i}$ and $\mathbf{Jx_0 T_i}$ calculated in $x_0$.

The differential of the vector function **pi (x(t))** in $x_0$ is given by:

$$ dx_0\, p_i\, (\delta x) = (z_1, z_2, z_3, z_4, \ldots ., z_k) \qquad (24) $$

with:

$$ z_1 = (\partial p_{i1}/\partial x_1)\delta x_1 + (\partial p_{i1}/\partial x_2)\delta x_2 + (\partial p_{i1}/\partial x_2)\delta x_2 + \ldots + (\partial p_{i1}/\partial x_m)\delta x_m $$

$$ z_2 = (\partial p_{i2}/\partial x_1)\delta x_1 + (\partial p_{i2}/\partial x_2)\delta x_2 + (\partial p_{i2}/\partial x_2)\delta x_2 + \ldots + (\partial p_{i2}/\partial x_m)\delta x_{mq} $$

$$ . $$
$$ . $$
$$ . $$

$$ z_k = (\partial p_{ik}/\partial x_1)\delta x_1 + (\partial p_{ik}/\partial x_2)\delta x_2 + (\partial p_{ik}/\partial x_2)\delta x_2 + \ldots + (\partial p_{ik}/\partial x_m)\delta x_m $$

The differential of the vector function *Ti(x(t))* in $x_0$ is given by:

$$ dx_0\, T_i\, (\delta x) = (y_1, y_2, y_3, y_4, \ldots ., y_k) \qquad (25) $$

with:

$$y_1 = (\partial T_{i1}/\partial x_1)\delta\, x_1 + (\partial T_{i1}/\partial x_2)\delta\, x_2 + (\partial T_{i1}/\partial x_3)\delta\, x_3 + \ldots + (\partial T_{i1}/\partial x_m)\delta x_m$$

$$y_2 = (\partial T_{i2}/\partial x_1)\delta\, x_1 + (\partial T_{i2}/\partial x_2)\delta\, x_2 + (\partial T_{i2}/\partial x_3)\delta\, x_3 + \ldots + (\partial T_{i2}/\partial x_m)\delta x_m$$

$$\vdots$$

$$y_k = (\partial T_{ik}/\partial x_1)\delta\, x_1 + (\partial T_{ik}/\partial x_2)\delta\, x_2 + (\partial T_{ik}/\partial x_3)\delta\, x_3 + \ldots + (\partial T_{ik}/\partial x_m)\delta\, x_m$$

If we consider a production process that undergoes fluctuations due to the variation of the process variables around the reference operating point (expressed by the set of points of the reference pvT curve of the material transformation process in the mold), we can assume that in the neighborhood of the operating point the functions $p_i(x(t))$ and $T_i(x(t))$ can be approximated with linear functions of the vector variable $x(t)$.

Now using the fundamental differential theorem we can write that the functions $p_i(x(t))$ and $T_i(x(t))$ in the neighborhood of the reference operating point defined by the process variables $x_0$ can be approximated, unless an infinitesimal of order superior to the norm $\|x(t) - x_0\|$, with the following expressions:

$$\delta x = x(t) - x_0 \tag{26}$$

$$p_i(x(t)) = p_i(x_0) + dx_0\, p_i(\delta x) \tag{27}$$

$$T_i(x(t)) = T_i(x_0) + dx_0\, T_i(\delta x) \tag{28}$$

if we indicate with :

$$\delta p_i(x(t)) = p_i(x(t)) - p_i(x_0) \tag{29}$$

$$\delta T_i(x(t)) = T_i(x(t)) - T_i(x_0) \tag{30}$$

the variations of the fundamental parameters of pressure and temperature of the raw material in the i-th point of the mold with respect to the values of the reference cycle at that point, the relations (27) and (28) can be rewritten in the following form:

$$\delta p_i(x(t)) = dx_0\, p_i(\delta x) \tag{31}$$

$$\delta T_i(x(t)) = dx_0\, T_i(\delta x) \tag{32}$$

that using the definition of differential become:

$$\delta p_i(x(t)) = Jx_0\, p_i * \delta x \tag{33}$$

$$\delta T_i(x(t)) = Jx_0 T_i * \delta x \tag{34}$$

Equations (33) and (34) represent the mathematical expression of the virtual sensor placed at the i-th point of the mold.

These equations define how to calculate the variations in pressure and temperature of the material in the "k" coordinates of the set $\{t\}$ (sampling time instants) at a point in the mold as an effect of the variations of the process variables.

If you refer to a specific production cycle (q-th cycle) the expressions (29) and (30) become:

$$\delta p_i(x(t_q)) = Jx_0 p_i * \delta x_q \tag{35}$$

$$\delta T_i(x(t_q)) = Jx_0 T_i * \delta x_q \tag{36}$$

$\delta p_i(x(t_q))$ e $\delta T_i(x(t_q))$ represent the variations of pressure and temperature in the i-th point of the mold in the q-th production cycle due to the variations $\delta x_q$ intervened in the q-th cycle.

The Jacobian matrices $Jx_0 p_i$ and $Jx_0 T_i$ do not depend on the cycle, they are matrices whose coefficients are defined and constant for a determined point of the mold, they change only by changing the point of the mold in which the pressure and flow variations are to be calculated. Moving to a new point, the Jacobian matrices represent a new virtual sensor.

Each virtual sensor, being associated to a certain position in the mold, is identified by two Jacobian matrices, one for the pressure and one for the temperature of the material being transformed.

Equations (35) and (36) can be used to monitor the process. By calculating the variations in pressure and temperature of the plastic material in the mold due to variations in the process variables, it is possible to trace the trajectory on the pvT diagram associated with the q-th production cycle and verify the deviation with respect to the reference trajectory at the i-th point in which the virtual sensor is positioned. Using the previous relations the verification of the deviation with respect to the reference conditions can be translated into the calculation of the Euclidean norm of the vectors (35) and (36):

$$\| Jx_0 p_i * \delta x_q \| \tag{37}$$

$$\| Jx_0 T_i * \delta x_q \| \tag{38}$$

The condition to verify if the process to the q-th cycle falls within the limits imposed by the quality control becomes:

$$\| Jx_0 p_i * \delta x_q \| < (\theta_1)_i \ \forall \ i \in \{P\} \tag{39}$$

$$\| Jx_0 T_i * \delta x_q \| < (\theta_2)_i \ \forall \ i \in \{P\} \tag{40}$$

The values $(\theta_1)_i$ e $(\theta_2)_i$ are the maximum limits of the euclidean norm of the vectors (35) and (36) relative to the i-th point to declare the process at the q-th cycle in quality conditions.

The elements $(\theta_1)_i$ e $(\theta_2)_i$ belong to the vectors **{θ1} and {θ2}** defined as the maximum value condition for the Euclidean standard to be respected in order to define the controlled system under quality molding conditions.

As previously described, the process variables **{x(t)}** comprise both uncontrollable independent variables and controllable variables **{x_c(t)},** the vector **{x_c(t)}** is contained in the vector **{x(t)}**, (eg switching position, compaction pressure, ...), in the case of controllable process variables, the variations are null (they are kept at the set value in all production cycles):

$$\delta xc = 0$$

with $\delta xc \in$ **{δxc}** set of variations of the controllable process variables

It follows that in equations (39) and (40) only the terms relating to uncontrollable process variables appear.

This type of action is useful for monitoring and checking that the process remains within the limits set by the quality system and can allow a strategy to accept or reject particular products.

In the case that alongside with the virtual sensors is also associated one or more real sensors, monitoring takes place by verifying that on virtual sensors the relationships (33) and (34) are verified and on the real sensor that the deviation of the actual pressure and temperature of the cycle under examination with respect to the pressure and temperature of the reference cycle, satisfies the following equations:

$$\delta p_{real} < (\theta_1)_r \qquad (41)$$

$$\delta T_{real} < (\theta_2)_r \qquad (42)$$

The values $(\theta_1)_r$ and $(\theta_2)_r$ are the maximum limits of the variations read on the real sensors to declare the process to the q-th cycle in quality conditions.

**Active control action on the process**

Equations (33) and (34) can be used for an active action on the process aimed at maintaining the process around the reference conditions expressed by equations (1) and (2).
As previously described, the process variables *{x(t)}* comprise both uncontrollable independent variables and controllable variables *{xc(t)}*. The vector *{xc(t)}* is contained in the vector *{x(t)}*. To compensate for the effect of the fluctuations of uncontrollable process variables, it is possible to generate a variation $\delta xc \neq 0$ in such a way as to cancel or reduce the effect of fluctuations.
Ideally the equations to be resolved to determine the variation are the following:

$$Jx_0\, p_i * \delta x_q = 0 \qquad \forall\ i \in \{P\} \qquad (43)$$

$$Jx_0\, T_i * \delta x_q\ = 0 \qquad \forall\ i \in \{P\} \qquad (44)$$

It is a system of "2k * n" equations with a number of unknowns equal to the number of controllable variables that have an effect on the process (if a controllable variable has no effect on the process the corresponding coefficient of the Jacobian matrix is null). In general, the number of equations is greater than the number of unknowns and the system has no closed solutions.
It is convenient for the purpose to replace the equations (43) and (44) with the following search conditions of the minimum of the Euclidean norm of the vectors:

$$\| Jx_0\, p_i * \delta x_q \| \qquad \forall\ i \in \{P\} \qquad (45)$$

$$\| Jx_0\, T_i * \delta x_q \| \qquad \forall\ i \in \{P\} \qquad (46)$$

The search for the minimum of the norm (45) and (46) can be performed using one of the methods of minimizing the norm of the vector functions of Applied Mathematics, imposing a minimum condition to be reached:

$$\| Jx_0\, p_i * \delta x_q \| < (\varepsilon_1)_i \qquad \forall\ i \in \{P\} \qquad (47)$$

$$\| Jx_0\, T_i * \delta x_q \| < (\varepsilon_2)_i \qquad \forall\ i \in \{P\} \qquad (48)$$

where $(\varepsilon_1)_i$ and $(\varepsilon_2)_i$ represent the values to be reached in the iterative solution processes for the vector norms (45) and (46) for each of the points of the set {P} in the q-th cycle under consideration. The elements $(\varepsilon_1)_i$ and $(\varepsilon_2)_i$ belong to the vectors $\{\varepsilon_1\}$ and $\{\varepsilon_2\}$ defined as the maximum value condition for the norm to be respected in order to define the controlled system under quality molding conditions.
If we write the vector of measurable variables *{x}* as the sum of two vectors having the same dimension (m-elements):

$\{x'_{nc}\}$ vector of the uncontrollable variables obtained from the vector $\{x\}$ of the measurable variables putting to zero the terms corresponding to the controllable variables,

$\{x'c\}$ vector of the controllable variables obtained from the vector $\{x\}$ of the measurable variables putting to zero the terms corresponding to the uncontrollable variables,

$$\{x\} = \{x'_c\} + \{x'_{nc}\} \tag{49}$$

and similarly for variations in controllable and uncontrollable variables:

$$\delta\{x\} = \delta\{x'_c\} + \delta\{x'_{nc}\} \tag{50}$$

the equations (47) and (48) can also be written in the form:

$$\| Jx_0\, p_i * \delta(x'_{nc})_q + Jx_0\, p_i * \delta(x'_c)_q \| < (\varepsilon_1)_i \qquad \forall \ i \in \{P\} \tag{51}$$

$$\| Jx_0\, T_i * \delta(x'_{nc})_q + Jx_0\, T_i * \delta(x'_c)_q \| < (\varepsilon_2)_i \qquad \forall \ i \in \{P\} \tag{52}$$

The first one that appears in the norm is the known component, the variables $\{x'_{nc}\}$ are not controllable but measurable, the second part in the norm is the term on which through iteration the condition expressed by (51) and (52) is searched.

The result of the iterative search process of equation conditions (51) and (52) is a set of variations $\{\delta x'_c\}_q$ to be made to the controllable variables in the q-th cycle to keep the quality process in that specific cycle:

$$\{\delta x'_c\}_q \neq 0 \tag{53}$$

In general, the value of the corrections will vary from cycle to cycle, the value of the correction will be the same only if the variations of the process variables remain constant.

In the case where with the virtual sensors there is one or more real sensors to apply the active compensation method, first a virtual sensor must be created in every position where a real sensor is located.

The set of points of the mold cavity in which the real sensors are positioned is indicated with $\{L\}$.

For these virtual sensors, positioned at each real sensor, it will be possible to write that the variation of pressure and temperature at the j-th instant of the q-th production cycle with respect to the reference cycle, in analogy with the relations (20) and (21):

$$\delta(p_{rj})_q = (p_{rj})_q - (p_{rj})_0 = \delta p_{rj}(x_c(t_q)) + \Delta(p_{rj})_q \tag{54}$$

$$\delta(T_{rj})_q = (T_{rj})_q - (T_{rj})_0 = \delta T_{rj}(x_c(t_q)) + \Delta(T_{rj})_q \tag{55}$$

where:

- the subscript "r" indicates the position of the real sensor belonging to the set {L};
- $\delta(p_{rj})_q$ and $\delta(T_{rj})_q$ represent the total variations of pressure and temperature in the q-th cycle at the j-th time coordinate at the real sensor point due to both controllable variables and uncontrollable process variables;
- $\delta p_{rj}(x_c(t_q))$ and $\delta T_{rj}(x_c(t_q))$ represent the variations in pressure and temperature in the q-th cycle at the j-th time coordinate at the point of the real sensor due to the only controllable variables;
- $\Delta(p_{rj})_q$ and $\Delta(T_{rj})_q$ represent the variations in pressure and temperature in the q-th cycle at the j-th instant measured with a direct measurement on the real sensor with respect to the reference cycle.

Indicating with $J_c p_r$ and $J_c T_r$ the Jacobian matrices of (k * h) elements related to the virtual sensor positioned at the real sensor with respect to the controllable process variables $x_c(t)$ (h elements):

$$J_c p_r = \left\{ \begin{array}{cccc} \partial p_{r1}/\partial x_{1c} & \partial p_{r1}/\partial x_{2c} & \cdots \cdots & \partial p_{r1}/\partial x_{hc} \\ \partial p_{r2}/\partial x_{1c} & \partial p_{r2}/\partial x_{2c} & \cdots \cdots & \partial p_{r2}/\partial x_{hc} \\ & \cdot & \cdot & \cdot \\ & \cdot & \cdot & \cdot \\ \partial p_{rk}/\partial x_{1c} & \partial p_{rk}/\partial x_{2c} & \cdots \cdots & \partial p_{rk}/\partial x_{hc} \end{array} \right\} \qquad (56)$$

$$J_c T_r = \left\{ \begin{array}{cccc} \partial T_{r1}/\partial x_{1c} & \partial T_{r1}/\partial x_{2c} & \cdots \cdots & \partial T_{r1}/\partial x_{hc} \\ \partial T_{r2}/\partial x_{1c} & \partial T_{r2}/\partial x_{2c} & \cdots \cdots & \partial T_{r2}/\partial x_{hc} \\ & \cdot & \cdot & \cdot \\ & \cdot & \cdot & \cdot \\ \partial T_{rk}/\partial x_{1c} & \partial T_{rk}/\partial x_{2c} & \cdots \cdots & \partial T_{rk}/\partial x_{hc} \end{array} \right\} \qquad (57)$$

we can write the following differentials calculated in points $x_c=0$:

$$d_0\, p_r\, (\delta x_c)_q = J_c\, p_r{}^* \,(\delta x_c)_q \qquad (58)$$

$$d_0\, T_r\, (\delta x_c)_q = J_c\, T_r{}^* \,(\delta x_c)_q \qquad (59)$$

Using these equations, the total variations in pressure (54) and temperature (55) in the q-th cycle can be expressed with the following relationships:

$$\delta p_{rq} = J_c\, p_r{}^* \,(\delta x_c)_q + \Delta p_{rq} \qquad (60)$$

$$\delta T_{rq} = J_c\, T_r{}^* \,(\delta x_c)_q + \Delta T_{rq} \qquad (61)$$

where $\Delta p_{rq}$ and $\Delta T_{rq}$ represent the vectors of the values measured on the real sensor placed in the point "r" belonging to the set {L}, with respect to the values measured in the reference cycle.

Equations (60) and (61) for real sensors with equations (35) and (36) for virtual sensors can be used for an active action on the process to maintain the process around the expressed reference conditions from equations (1) and (2). To this end, the minimum standard of the following vectors is searched for:

$$\| Jx_0\, p_i * \delta x_q \| \qquad\qquad \forall\ i \in \{P\} \qquad (62)$$

$$\| J_c\, p_r{}^* \,(\delta x_c)_q + \Delta p_{rq} \| \qquad\qquad \forall\ r \in \{L\} \qquad (63)$$

$$\| Jx_0\, T_i * \delta x_q \| \qquad\qquad \forall\ i \in \{P\} \qquad (64)$$

$$\| J_c\, T_r{}^* \,(\delta x_c)_q + \Delta T_{rq} \| \qquad\qquad \forall\ r \in \{L\} \qquad (65)$$

Where equations (62) and (64) refer to the virtual sensors of the set {P} while the equations (63) and (65) refer to the virtual sensors placed in the position of the real sensors of the set {L}.

The search for the minimum of the norm (62), (63), (64) and (65) can be solved using one of the methods of minimizing the norm of the vector functions of Applied Mathematics, imposing a minimum condition to be reached:

$$\| Jx_0 p_i * \delta(x'_{nc})_q + Jx_0 p_i * \delta(x'_c)_q \| < (\varepsilon_1)_i \qquad \forall \ i \in \{P\} \qquad (66)$$

$$\| J_c p_r * (\delta x_c)_q + \Delta p_{rq} \| < (\varepsilon'_1)_r \qquad \forall \ r \in \{L\} \qquad (67)$$

$$\| Jx_0 p_i * \delta(x'_{nc})_q + Jx_0 p_i * \delta(x'_c)_q \| < (\varepsilon_2)_i \qquad \forall \ i \in \{P\} \qquad (68)$$

$$\| J_c T_r * (\delta x_c)_q + \Delta T_{rq} \| < (\varepsilon'_2)_r \qquad \forall \ r \in \{L\} \qquad (69)$$

The result of the iterative search process of the conditions (66), (67), (68) and (69) is a set of variations $\{\delta \mathbf{xc}\}$ to be made to the controllable variables to maintain the quality process in the q-th cycle under consideration :

$$\{\delta xc\} \neq 0$$

In general, the value of the corrections will vary from cycle to cycle, the correction value will be the same only if the variations of the process variables remain constant with respect to the reference cycle.

As a simplified control solution on the process derived from the solution described above, let us consider the case of only real sensors without adding virtual sensors (the vector $\{P\}$ is a null vector). In this case, to evaluate the dependence of the pressure and the temperature of the material in the cavity from the controllable variables, the only Jacobian matrices used are the matrices $J_c p_r$ and $J_c T_r$ associated with the real sensors positioned in the points of the set $\{L\}$. The conditions for the search for the minimum of the Euclidean norm are reduced to the sole conditions:

$$\| J_c p_r * (\delta x_c)_q + \Delta p_{rq} \| < (\varepsilon'_1)_r \qquad \forall \ r \in \{L\} \qquad (70)$$

$$\| J_c T_r * (\delta x_c)_q + \Delta T_{rq} \| < (\varepsilon'_2)_r \qquad \forall \ r \in \{L\} \qquad (71)$$

The result of the iterative search process of conditions (70) and (71) is a set of variations $\{\delta xc\}$ to be made to the controllable variables to maintain the quality process in the q-th cycle under consideration.

Where $(\varepsilon_1)_i$ and $(\varepsilon_2)_i$ represent the values to be attained in iterative solution processes for vector rules (66) and (68) for each of the points in the set $\{P\}$ in the q-th cycle under consideration. The elements $(\varepsilon_1)_i$ and $(\varepsilon_2)_i$ belong to the vectors $\{\varepsilon 1\}$ and $\{\varepsilon 2\}$ defined as the maximum value condition for the norm to be respected in order to define the controlled system under quality molding conditions.

Where $(\varepsilon'_1)_i$ and $(\varepsilon'_2)_i$ represent the values to be reached in the iterative solution processes for the vector norms (67), (69), (70) and (71) for each of the points of the set $\{L\}$ in the q-th cycle under consideration. The elements $(\varepsilon'_1)_i$ and $(\varepsilon'_2)_i$ belong to the vectors $\{\varepsilon'1\}$ and $\{\varepsilon'2\}$ defined as the condition of maximum value for the norm to be respected in order to define the controlled system under quality molding conditions .

It is important to note that to determine the minimum of the norm expressed by the relations (67), (69), (70) and (71) it is necessary to know the values of $\Delta p_{rq}$ and $\Delta t_{rq}$ (reading on the real transducer of the pressure and temperature deviation compared to the reference cycle).

**Method for calculating the coefficients of the Jacobian matrices**

From the description it is evident that the fundamental element for the implementation of the proposed system of monitoring and compensation of the effects on the process of variations of the process variables is to determine the coefficients of the Jacobian matrices of the virtual sensors placed in the selected "n" points of the mold and, if there are also real sensors, the coefficients of the Jacobian matrices of the virtual sensors associated with the real sensors and placed at the points where the real sensors of the mold are positioned.

The following is a practical method for calculating matrix coefficients using the results of FEM simulations of the injection - compaction and cooling phase.

One of the finite-element calculation programs available on the market can be used for this purpose.

The steps for calculating the coefficients are as follows:

a) definition of the vector **{x}** of the controllable and uncontrollable measurable variables whose effect is to be evaluated on the variation of the pressure and temperature in the mold cavity during the filling, holding and cooling injection process, (also possibly based on experimental tests on the mold in the verification phase of the same) that lead to a product that meets the quality requirements;

b) definition of the points (set **{P}**) of the mold cavity relevant for checking the quality of the manufactured article where to place the virtual sensors;

c) definition of the points (set **{L}**) of the mold cavity in which the real sensors can be located and in which the associated virtual sensors are installed;

d) definition of the vector of the temporal coordinates **{t}** in which we want to divide the period of time that elapses from the beginning of the injection phase to the end of the cooling phase;

e) definition of the values of the process variables in the reference conditions **{x$_0$}**;

f) execution of the finite element simulation, with an appropriate calculation tool, of the injection-holding and cooling process in the reference conditions for the process variables **{x$_0$}**, for a given mold and for a given plastic material;

g) determination from the simulation in the reference conditions, according to point f), of the vectors **{p$_0$}$_i$** and **{T$_0$}$_i$**, whose elements are the pressure and temperature values at the point "i" belonging to the set **{P}** and sampled in the instants defined by the temporal coordinates of the set **{t}**;

h) determination from the simulation in the reference conditions, according to point f), of the vectors **{p$_0$}$_r$** e **{T$_0$}$_r$**, whose elements are the values of pressure and temperature in the point "r" belonging to the set **{L}** and sampled in the instants defined by the temporal coordinates of the set **{t}**;

i) definition of the vector of the variations **{δx}** of the measurable process variables {x} to be used for the simulations;

j) execution for each of the measurable process variables **{x}** of the finite element simulations of the injection-compaction and cooling process under the conditions obtained by varying one of the measurable process variables and maintaining the other measurable process variables fixed at the value of the reference conditions;

k) determination, for each of the simulations according to point j) under conditions with only one variable process "w" changed at a time, of the vectors **{p$_w$}$_i$** and **{T$_w$}$_i$** for each point belonging to the set **{P}**, whose elements represent the pressure and temperature value for each time coordinate of the set {t} obtained from the simulation with a determined changed variable "w";

l) determination, for each of the simulations according to point j) under conditions with only one process variable "w" changed at a time, of the vectors **{p$_w$}$_r$** and **{T$_w$}$_r$** for each point belonging to the set **{L}**, whose elements represent the pressure and temperature value for each time coordinate of the set **{t}** obtained from the simulation with a determined changed variable "w";

m) calculation of the coefficients of the Jacobian matrices **Jx$_0$p$_i$ Jx$_0$T$_i$** of the virtual sensor positioned in the point "i" belonging to the set of points **{P}** of the cavity of a given mold and of a relative molding process using the finite difference method to approximate the value of partial derivatives according to the following relationships:

$$\partial p_{ij}/\partial x_w = (p_{i\,w}(t_j) - p_{i\,0}(t_j)) / \delta x_w$$

$p_{iw}(t_j)$     pressure value at the point corresponding to the position of the virtual sensor in the mold cavity resulting from the finite element simulation obtained by varying the w-th process variable at the j-th temporal coordinate

$p_{i0}(t_j)$     pressure value at the point corresponding to the position of the virtual sensor in the mold cavity resulting from the finite element simulation obtained with the measurable process variables in the reference conditions at the j-th temporal coordinate

$\delta x_w$     value of the variation of the w-th variable used for the simulation

n) calculation of the coefficients of the Jacobian matrices **Jx$_0$p$_r$** , **Jx$_0$T$_r$** of the virtual sensor positioned in the point "r" belonging to the set of points **{L}** of the cavity of a given mold and of a relative molding process using the finite difference method to approximate the value of the partial derivatives according to the following relationships:

$$\partial p_{rj}/\partial x_w = (p_{r\,w}(t_j) - p_{r\,0}(t_j)) / \delta x_w$$

$p_{rw}(t_j)$     pressure value at the point corresponding to the position of the virtual sensor in the mold cavity resulting from the finite element simulation obtained by varying the w-th process variable at the j-th temporal coordinate

$p_{r0}(t_j)$     pressure value at the point corresponding to the position of the virtual sensor in the mold cavity resulting from the finite element simulation obtained with the measurable process variables in the reference conditions at the j-th temporal coordinate

$\delta x_w$     value of the variation of the w-th variable used for the simulation.

## Claims

1. Method for generating the information relating to the transformation of the plastic material in a mold, useful for the monitoring and control of the injection molding process associated to said mold with the help of one or more virtual pressure and temperature sensors of the plastic material, referred to relevant points of the mold cavity defined by a set of points **{P}** of the mold cavity and for a set of temporal coordinates **{t}** during the injection, holding and cooling process,
wherein said virtual sensors provide information of variation of the pressure and temperature of the plastic material in said set of points **{P}** of the cavity for said set of temporal coordinates **{t}** during the injection, holding and cooling process, as a consequence of changes in process measurable variables **{x}** that affect the process, said virtual sensors being represented by a mathematical model whose parameters are calculated by means of a calculation based on the pressure and temperature values, in the set of points **{P}** and in the set of temporal coordinates **{t}**, obtained from the finite element simulation of the filling holding and cooling process with said mold in the conditions represented by the process variables in the reference conditions **{x₀}** and from the simulations to the finite elements of the filling-maintenance and cooling process under conditions obtained by varying the process variables **{x}** one at a time.

2. Method according to claim 1, wherein for all the points **{P}** of the mold cavity to which the virtual sensors are referred and for all the temporal coordinates **{t}** it is verified that the distances between the pressure and temperature trajectories of the plastic material in the mold in the molding cycle under examination, and the pressure and temperature trajectories of the plastic material in a reference molding cycle, are less than a set of predefined values.

3. Method according to claim 1 or 2, wherein for all the points **{P}** of the mold cavity to which the virtual sensors are referred and for all the temporal coordinates **{t},** the distance between the pressure and temperature trajectories of the plastic material in the mold in the molding cycle under examination, and the pressure and temperature trajectories of the plastic material in the reference molding cycle is minimized.

4. Method according to any one of the preceding claims, wherein said mathematical model, of the virtual sensor referred to the point "i" belonging to the set of points **{P}** of the mold cavity, is represented by two Jacobian matrices, one for the pressure information $\textbf{\textit{Jx}}_0\textbf{\textit{p}}_i$ and one for the temperature information $\textbf{\textit{Jx}}_0\textbf{\textit{T}}_i$ of the material under transformation, wherein:

- the elements $\partial p_{ij}/\partial x_w$, where "j" is the index for the rows and "w" is the index for the columns of the Jacobian matrix $\textbf{\textit{Jx}}_0\textbf{\textit{p}}_i$, represent the derivative of the pressure (pi) at the point "i" belonging to the set of points **{P}** of the mold cavity at the j-th temporal coordinate of the set **{t}** with respect to the w-th process variable, in the condition corresponding to the set of reference process variables **{x₀}**;
- the elements $\partial T_{ij}/\partial x_w$, where "j" is the index for the rows and "w" is the index for the columns of the Jacobian matrix $\textbf{\textit{Jx}}_0\textbf{\textit{T}}_i$, represent the derivative of the temperature ($T_i$) at the point "i" belonging to the set of points **{P}** of the mold cavity at the j-th temporal coordinate of the set **{t}** with respect to the w-th process variable, in the condition corresponding to the set of reference process variables **{x₀}**;
- the rows of each matrix represent the derivatives calculated at the same temporal coordinate of the set **{t}** for the different measurable variables of the process **{x};**
- the columns of each matrix represent the derivatives calculated for the same measurable variable of the process at the different temporal coordinates of the set **{t}.**

5. Method according to claim 4, wherein said coefficients of the Jacobian matrices $\textbf{\textit{Jx}}_0\textbf{\textit{p}}_i$ , $\textbf{\textit{Jx}}_0\textbf{\textit{T}}_i$ of the virtual sensor referred to the point "i" belonging to the set of points **{P}** of the mold cavity are determined according to the following steps:

a) definition of the vector **{x}** of the controllable and uncontrollable measurable variables whose effect is to be evaluated on the variation of the pressure and temperature in the mold cavity during the filling, compacting and cooling injection process, which lead to a product responsive to quality requirements;
b) definition of the set of points **{P}** of the mold cavity relevant for the quality control of the product where to place the virtual sensors;

c) definition of the temporal coordinates vector **{t}** in which one wants to divide the period of time that elapses from the beginning of the injection phase to the end of the cooling phase;

d) definition of the values of the process variables under the reference conditions **{x$_0$}**;

e) execution of the finite element simulation of the injection holding and cooling process in the reference conditions **{x$_0$}**, for a given mold and for a given plastic material;

f) determination from the simulation in the reference conditions, according to point e), of the vectors **{p$_0$}$_i$** and **{T$_0$}$_i$**, whose elements are the pressure and temperature values at the point "i" belonging to the set **{P}** and sampled in the instants defined by the temporal coordinates of the set **{t}**;

g) definition of the vector of the variations **{$\delta$x}** of the measurable process variables {x} to be used for the simulations;

h) execution for each of the measurable process variables **{x}** of the finite element simulations of the injection-holding and cooling process under the conditions obtained by varying one of the measurable process variables and maintaining fixed the other measurable process variables at the value of the reference conditions;

i) determination, for each of the simulations according to point h) under conditions with only one process variable "w" varied at a time, of the vectors **{p$_w$}$_i$** and **{T$_w$}$_i$** for each point belonging to the set **{P}**, whose elements represent the pressure and temperature value for each time coordinate of the set **{t}** obtained from the simulation with a determined variable "w";

j) calculation of the coefficients of the Jacobian matrices **Jx$_0$p$_i$**, **Jx$_0$T$_i$** of the virtual sensor positioned in the point "i" belonging to the set of points **{P}** of the cavity of a given mold and of a related molding process using the finite difference method to approximate the value of partial derivatives according to the following relationships:

$$\partial p_{ij}/\partial x_w = (p_{i\,w}(t_j) - p_{i\,0}(t_j))\,/\,\delta x_w$$

p$_{iw}$(t$_j$) pressure value at the point corresponding to the position of the virtual sensor in the mold cavity resulting from the finite element simulation obtained by varying the w-th process variable at the j-th temporal coordinate

p$_{i0}$(t$_j$) pressure value at the point corresponding to the position of the virtual sensor in the mold cavity resulting from the finite element simulation obtained with the process variables measurable in the reference conditions at the j-th temporal coordinate

$\delta$x$_w$ value of the variation of the w-th variable used for the simulation.

6. Method according to claim 4 or 5, wherein the trajectory of the molding process for a given molding cycle under examination (q$^{th}$ cycle), for each of the points **{P}** of the cavity to which the virtual sensors are referred, are plotted on the pvT diagram using as coordinates the pressure and temperature values corresponding to the vector elements **{p}$_i$** and **{T}$_i$** obtained by adding to the vectors **{p$_0$}$_i$** and **{T$_0$}$_i$** respectively of the pressure and temperature of the reference cycle in the i-th point of the cavity, the vectors obtained as a product between the Jacobian matrices **Jx$_0$p$_i$** and **Jx$_0$T$_i$** and the vector of the variations **{$\delta$x$_q$}** of the measurable process variables, obtained as the difference between the values of the measurable process variables **{x}** in the molding cycle under examination (q$^{th}$ cycle) and the values of the measurable reference process variables **{x$_0$}**, said points of the trajectory corresponding to the points crossed by the transformation of the plastic material into the mold in correspondence with the temporal coordinates **{t}** of the molding cycle under examination.

7. A method according to any one of Claims 4, 5 and 6, with claim 4 depending on claim 1 or 2, wherein, for a determined point "i" of the mold cavity belonging to the set **{P}** to which the i-th virtual sensor is referred for a given molding cycle under examination (q$^{th}$ cycle), the distance between the pressure and temperature trajectories of the molding process for each of the temporal coordinates belonging to the set **{t}** and the corresponding trajectory of the material in the reference cycle is determined by the module of each element of the vectors **{$\delta$p}$_i$** and **{$\delta$T}$_i$** obtained as a product between the Jacobian matrices **Jx$_0$p$_i$** and **Jx$_0$T$_i$** and the vector of the variations **{$\delta$x$_q$}** of the measurable process variables in the molding cycle under examination (q$^{th}$ cycle).

8. Method according to any one of Claims 4, 5 and 6, with claim 4 depending on claim 1 or 2, wherein it is verified that: Euclidean norm respectively of the vectors obtained as a product between the Jacobian matrix of the **Jx$_0$p$_i$** pressure and the vector of the variations in the molding cycle under examination (q$^{th}$ cycle) **{$\delta$x$_q$}**, and between the Jacobian matrix **Jx$_0$T$_i$** of the temperature and the vector of the variations **{$\delta$x$_q$}**, for each of the points of the set **{P}** is smaller than the i-th element of the vectors **{$\theta_1$}$_i$** and **{$\theta_2$}$_i$** defined as the condition of maximum value for the standard in the i-th point to be respected in order to define the system under quality molding conditions.

$$\| Jx_0\,p_i * \delta x_q \| < (\theta_1)_i \qquad \forall \; i \in \{P\}$$

$$\| Jx_0\,T_i * \delta x_q \| < (\theta_2)_i \qquad \forall \; i \in \{P\}$$

9. Method according to any one of Claims 4, 5 and 6, with claim 4 dependent on claim 1 or 3, wherein the controllable process variables $\{x_c(t)\}$, a subset of the measurable process variables $\{x\}$, are controlled in such a way as to make the Euclidean norm respectively of the vectors obtained as a product between the Jacobian matrix $Jx_0 p_i$ of the pressure and the vector of the variations in the molding cycle under examination ($q^{th}$ cycle) $\{\delta x_q\}$, and between the Jacobian matrix $Jx_0 T_i$ of the temperature and the vector of the variations $\{\delta x_q\}$, for each of the points of the set $\{P\}$, less than the i-th element of the vectors $\{\varepsilon_1\}$ and $\{\varepsilon_2\}$ defined as the maximum value condition for the norm to be respected to define the system controlled under quality molding conditions.

$$\| Jx_0\,p_i * \delta x_q \| < (\varepsilon_1)_i \qquad \forall \; i \in \{P\}$$

$$\| Jx_0\,T_i * \delta x_q \| < (\varepsilon_2)_i \qquad \forall \; i \in \{P\}$$

10. Method according to any one of Claims 1 to 5, wherein one or more real sensors are provided, whose positions in the mold cavity are defined by the set $\{L\}$, at least a number of virtual sensors equal to the number of real sensors and positioned in the same positions of the set $\{L\}$ of the real sensors, and a variable number of virtual sensors whose positions in the mold cavity are defined by the set $\{P\}$.

11. Method according to claim 10, wherein said mathematical model, of the virtual sensor positioned at the "r" point belonging to the set of points $\{L\}$ of the mold cavity to which the virtual sensors are referred, is represented by two Jacobian matrices , one for the pressure information $Jx_0 p_r$ and one for the temperature information of the material in transformation $Jx_0 T_r$, wherein:

• the elements $\partial p_{rj}/\partial x_w$, where "j" is the index for the rows and "w" is the index for the columns, of the Jacobian matrix $Jx_0 p_r$ represent the derivative of the pressure ($p_r$) at the point "r" belonging to the set of points $\{L\}$ of the mold cavity at the j-th temporal coordinate of the set $\{t\}$ with respect to the w-th process variable, in the condition corresponding to the set of reference process variables $\{x_0\}$;
• the $\partial T_{rj}/\partial x_w$ elements, where "j" is the index for the rows and "w" is the index for the columns, of the Jacobian matrix $Jx_0 T_r$ represent the derivative of the temperature ($T_r$) at the point "r" belonging to the set of points $\{L\}$ of the mold cavity at the j-th temporal coordinate of the set $\{t\}$ with respect to the w-th process variable, in the condition corresponding to the set of reference process variables $\{x_0\}$;
• the rows of each matrix represent the derivatives calculated at the same temporal coordinate of the set $\{t\}$ for the different measurable variables of the process;
• the columns of each matrix represent the derivatives calculated for the same measurable variable of the process at the different temporal coordinates of the set $\{t\}$.

12. Method according to claim 11, wherein said coefficients of the Jacobian matrices $Jx_0 p_r$ and $Jx_0 T_r$ of the virtual sensor referred to the point "r" belonging to the set of points $\{L\}$ of the mold cavity are determined according to the following steps:

a) definition of the vector $\{x\}$ of the controllable and uncontrollable measurable variables whose effect is to be evaluated on the variation of the pressure and temperature in the mold cavity during the filling, holding and cooling injection process leading to an article corresponding to the quality requirements;
b) definition of the set of points $\{L\}$ of the mold cavity where the real sensors are positioned and where the virtual sensors associated with them are referred to;
c) definition of the vector of the temporal coordinates $\{t\}$ in which one wants to divide the period of time that elapses from the beginning of the injection phase to the end of the cooling phase;
d) definition of the values of the process variables under the reference conditions $\{x_0\}$;

e) execution of the finite element simulation of the injection-compaction and cooling process in the reference conditions for the process variables $\{x_0\}$, for a given mold and for a given plastic material;

f) determination from the simulation in the reference conditions, according to point e), of the vectors $\{p_0\}_r$ and $\{T_0\}_r$, whose elements are the pressure and temperature values at the point "r" belonging to the set $\{L\}$ and sampled in the instants defined by the temporal coordinates of the set $\{t\}$;

g) definition of the vector of the variations $\{\delta x\}$ of the measurable process variables $\{x\}$ to be used for the simulations;

h) execution for each of the measurable process variables $\{x\}$ of the finite element simulations of the injection-compaction and cooling process under the conditions obtained by varying one of the measurable process variables and maintaining the other measurable process variables fixed at the value of the reference conditions;

i) determination, for each of the simulations according to point h) under conditions with only one process variable "w" varied at a time, of the vectors $\{p_w\}_r$ and $\{T_w\}_r$ for each point belonging to the set $\{L\}$, whose elements represent the pressure and temperature value for each temporal coordinate of the set $\{t\}$ obtained from the simulation with a determined varied variable "w";

j) calculation of the coefficients of the Jacobian matrices $Jx_0p_r$ and $Jx_0T_r$ of the virtual sensor the "r" point belonging to the set of points $\{L\}$ of the mold cavity and of a relative molding process using the finite difference method to approximate the value of partial derivatives according to the following relations:

$$\partial p_{rj} / \partial x_w = (p_{r\,w}(t_j) - p_{r\,0}(t_j)) \,/\, \delta x_w$$

$p_{rw}(t_j)$ pressure value at the point corresponding to the position of the virtual sensor in the mold cavity resulting from the finite element simulation obtained by varying the process variable w-th to the j-th temporal coordinate

$p_{r0}(t_j)$ pressure value at the point corresponding to the position of the virtual sensor in the mold cavity resulting from the finite element simulation obtained with the process variables measurable in the reference conditions at the j-th temporal coordinate

$\delta x_w$ value of the variation of the w-th variable used for the simulation.

13. Method according to any one of Claims 1, 3, 4, 5, 6, 10, 11 and 12, wherein the controllable process variables $\{x_c\}$ are acted in such a way as to satisfy all the following conditions:

• that the Euclidean norm, for all virtual sensors belonging to the set $\{P\}$, respectively of the vectors obtained as a product between the Jacobian matrix $Jx_0p_i$ of the pressure and the vector of the variations in the molding cycle under examination ($q^{th}$ cycle) $\{\delta x_q\}$, and between the Jacobian matrix $Jx_0T_i$ of the temperature and the vector of the variations $\{\delta x_q\}$, for each of the points of the set $\{P\}$, is smaller than the i-th element of the vectors $\{\varepsilon 1\}$ and $\{\varepsilon 2\}$ defined as the condition of maximum value for the norm to be respected to define the controlled system under quality molding conditions:

$$\| Jx_0\, p_i * \delta x_q \| < (\varepsilon_1)_i \qquad \forall \; i \in \{P\}$$

$$\| Jx_0\, T_i * \delta x_q \| < (\varepsilon_2)_i \qquad \forall \; i \in \{P\}$$

• that the Euclidean norm, for all virtual sensors belonging to the set $\{L\}$, respectively of the vectors obtained as the sum between the vectors of the $\Delta p_{rq}$ values measured on the real sensor placed in the "r" point and the product between the Jacobian matrix $Jx_0p_r$ of the pressure and the vector of the variations of the controllable variables in the molding cycle under examination ($q^{th}$ cycle) $\{\delta(x_c)_q\}$, and as the sum between $\Delta T_{rq}$ measured on the real sensor placed in the "r" point and the product between the Jacobian matrix $Jx_0T_r$ of the temperature and the vector of the variations $\{\delta(x_c)_q\}$, for each of the points of the set $\{L\}$, both smaller than the r-th element of the vectors $\{\varepsilon'1\}$ and $\{\varepsilon'2\}$ defined as the condition of maximum value for the norm to be respected to define the system controlled under quality molding conditions:

$$\| J_c\, p_r * (\delta x_c)_q + \Delta p_{rq} \| < (\varepsilon'_1)_r \qquad \forall \; r \in \{L\}$$

$$\| J_c \, T_r{}^* \, (\delta x_c)_q + \Delta T_{rq} \| < (\varepsilon'_2)_r \qquad\qquad \forall \; r \in \{L\}$$

FIG.1

ADAPTIVE CONTROL

Material database
PVT curves

(2)

Laws for the calculation
of Variations

Model
of the system

(3)

(d)

Set points

Control System
of the process

(c)

INJECTION
MOLDING PROCESS
TO CHECK

(a)

(b)

(1)

Uncontrolled variables
that act on the process

EP 3 520 987 A1

FIG.2

Spec. vol. in E-3 m³/kg

0.1 MPa
40 MPa
80 MPa
120 MPa
160 MPa
200 MPa

FIG.3

FIG.4

Europäisches
Patentamt

European
Patent Office

Office européen
des brevets

# EUROPEAN SEARCH REPORT

**Application Number**

EP 19 15 4605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 297 941 A2 (DORN DEMAG CORP VAN [US]) 2 April 2003 (2003-04-02) * paragraphs [0034] - [0043], [0064] - [0066]; figures 1-15 * | 1-13 | INV. B29C45/76 |
| X | US 2017/015040 A1 (CHANG YUING [TW] ET AL) 19 January 2017 (2017-01-19) * paragraphs [0065], [0066], [0070], [0074] - [0093]; figures 1-39 * | 1-13 | |
| X | LUOL R C ET AL: "On-line self-tuning using embedded pressure sensors in the injection molding process", INDUSTRIAL ELECTRONICS SOCIETY, 2000. IECON 2000. 26TH ANNUAL CONFJERE NCE OF THE IEEE 22-28 OCT. 2000, PISCATAWAY, NJ, USA,IEEE, vol. 2, 22 October 2000 (2000-10-22), pages 1068-1073, XP010569328, ISBN: 978-0-7803-6456-1 * page 3 - page 5; figures 1,2 * | 1-13 | |
| X | US 2002/188375 A1 (SHIOIRI TAKAYOSHI [JP] ET AL) 12 December 2002 (2002-12-12) * paragraphs [0016] - [0024]; figures 1-3 * | 1-13 | **TECHNICAL FIELDS SEARCHED (IPC)** B29C |

The present search report has been drawn up for all claims

| Place of search | Date of completion of the search | Examiner |
|---|---|---|
| Munich | 27 February 2019 | Horubala, Tomasz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 520 987 A1

## ANNEX TO THE EUROPEAN SEARCH REPORT
## ON EUROPEAN PATENT APPLICATION NO.

EP 19 15 4605

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2019

| Patent document cited in search report | | Publication date | Patent family member(s) | | Publication date |
|---|---|---|---|---|---|
| EP 1297941 | A2 | 02-04-2003 | AT | 385887 T | 15-03-2008 |
| | | | DE | 60224967 T2 | 27-11-2008 |
| | | | EP | 1297941 A2 | 02-04-2003 |
| | | | US | 2003080452 A1 | 01-05-2003 |
| US 2017015040 | A1 | 19-01-2017 | NONE | | |
| US 2002188375 | A1 | 12-12-2002 | JP | 3824503 B2 | 20-09-2006 |
| | | | JP | 2002361704 A | 18-12-2002 |
| | | | US | 2002188375 A1 | 12-12-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1297941 A2
- US 2017015040 A1

- US 2002188375 A1

**Non-patent literature cited in the description**

- **LUOL R C et al.** On-line self -turning ... *INDUSTRIAL ELECTRONIC SOCIETY, 2000, IECON 2000, 26TH ANNUAL CONFERENCE OF THE IEEE 22-28 OCT. 2000,* 22 October 2000, vol. 2, 1068-1073